# EUROPÄISCHE PATENTSCHRIFT

(11) **EP 4 067 550 B1**
(45) Veröffentlichungstag und Bekanntmachung des Hinweises auf die Patenterteilung: **14.06.2023**
(21) Anmeldenummer: 22162152.7
(22) Anmeldetag: 15.03.2022
(51) Int. Cl.: D04H 1/492, D04H 1/498, D04H 1/732, D04H 1/74

(54) **ANLAGE ZUR VERFESTIGUNG MINDESTENS EINER NASS- ODER TROCKENGELEGTEN FASERLAGE ZU EINER VLIESBAHN**
INSTALLATION FOR CONSOLIDATING AT LEAST ONE WET OR DRY LAID FIBRE LAYER TO A FLEECE WEB
INSTALLATION DE RENFORCEMENT D'AU MOINS UNE COUCHE FIBREUSE DÉPOSÉE À L'ÉTAT HUMIDE OU SEC EN UNE BANDE NON TISSÉE

(30) Priorität: 29.03.2021 DE 102021107902
(43) Veröffentlichungstag der Anmeldung: 05.10.2022
(73) Patentinhaber: Andritz Küsters GmbH, 47805 Krefeld (DE)
(72) Erfinder: NOELLE, Frederic, 38330 Saint Nazaire les Eymes (FR); LATENDORF, Dennis, 47798 Krefeld (FR)
(74) Vertreter: Kluin Patent

(56) Entgegenhaltungen:
- WO-A1-2009/112015
- WO-A1-2016/165798
- DE-A1-102013 107 237
- US-A1- 2002 157 766

## Beschreibung

Die Erfindung betrifft eine Anlage zur Verfestigung mindestens einer nass- oder trockengelegten Faserlage zu einer Vliesbahn, mit einem Förderer, der ein umlaufendes Band mit einem oberen Trum umfasst, auf welches die mindestens eine Faserlage ablegbar und in einer Produktionsrichtung verlagerbar ist.

Es ist in der Vliesindustrie bekannt, nass- oder trockengelegte, Holz- oder andere Fasern umfassende Lagen wasserstrahlzuverfestigen, bspw. um wegspülbare Tücher zu produzieren, die Mischungen aus Holzfaserstoff und Kunststofffasern umfassen. Anlagen der eingangsgenannten Art werden insbesondere verwendet, um die Lagen im nassen Zustand miteinander zu verbinden.

Es ist in der Vliesindustrie zur Herstellung von mehrschichtigen Vliesen bekannt, nass- oder trockengelegte Lagen mit kardierten oder gesponnenen Lagen durch Wasserstrahlverwirbelung miteinander zu verbinden. Diese Anlagen umfassen regelmäßig einen Förderer mit einer Verfestigungseinrichtung und in Produktionsrichtung hiernach eine zweite Verfestigungseinrichtung mit mindestens zwei Verfestigungstrommeln, mit welcher beide Seiten der Vliesbahn verfestigt werden können. Diese Anlagen sind insbesondere geeignet, um eine intensive Verbindung der Lagen miteinander zu erzielen, was zu Vliesbahnen mit hohen Zugfestigkeiten und Abriebfestigkeiten führt.

Aus der WO 2009/112015 A1 ist eine Vorrichtung zur Herstellung eines Vlieses bekannt. Sie umfasst ein erstes umlaufendes Siebband mit einem oberen Trum, auf das ein Faserflor abgelegt und mittels einer ersten Verfestigungseinrichtung verfestigt wird, während sich der Faserflor auf dem oberen Trum befindet. Ferner umfasst diese Vorrichtung eine zweite Verfestigungseinrichtung, welcher der mittels der ersten Verfestigungseinrichtung verfestigte Faserflor zugeführt und zu einem Vlies verfestigt wird.

Die WO 2016/165798 A1 offenbart Anlagen, bei welchen Fasern auf ein oberes Trum eines wasserdurchlässigen Bandes abgelegt und auf diesem mittels einer ersten Verfestigungseinrichtung verfestigt werden. Diese Anlagen umfassen des Weiteren eine Saugtrommel, mittels welcher der verfestigte Faserstoff von dem Band abgelöst und einer zweiten Verfestigungseinrichtung zugeführt wird, in welcher der Faserstoff mit einem ebenfalls der zweiten Verfestigungseinrichtung zugeführten Vlies verbunden wird.

In der vorgenannten Vorrichtung und in der vorgenannten Anlage erfolgt eine Verfestigung der Bahn nacheinander an zumindest zwei Verfestigungseinrichtungen.

Nachteilig ist jedoch das Fehlen von Anlagen, die sowohl zur Produktion von nur schwach verfestigten Vliesbahnen, bspw. zur Herstellung von wegspülbaren Tüchern, und zur Herstellung von stark verfestigten, insbesondere mehrere Lagen aufweisenden Vliesbahnen in gleicher Weise gut geeignet sind.

Es ist daher die Aufgabe der Erfindung, eine Anlage bereitzustellen, die zur Herstellung dieser unterschiedlichen Vliesbahnen gleichermaßen gut geeignet ist.

Diese Aufgabe wird durch die in Anspruch 1 wiedergegebene Anlage gelöst.

Die erfindungsgemäße Anlage umfasst eine erste Verfestigungseinrichtung, mittels welcher mindestens eine nass- oder trockengelegte Faserlage verfestigbar ist, während sie sich auf dem oberen Trum des umlaufenden Bandes befindet. Die erste Verfestigungseinrichtung ist derart ausgebildet, dass sie bspw. auch zur vergleichsweisen geringen Verfestigung von Faserlagen, die bspw. Fasern natürlichen Ursprungs wie Holzfasern oder Viskose, oder Kunstfasern oder Mischungen derselben, umfassen.

Die erfindungsgemäße Anlage umfasst des Weiteren eine zweite Verfestigungseinrichtung, mittels welcher eine Faserlage nach Verlassen des oberen Trums zusätzlich verfestigbar ist. Die zweite Verfestigungseinrichtung ist insbesondere derart ausgebildet, dass sie zur Verfestigung bspw. mehrerer Lagen, die kardierte Vliese oder Spinnvliese und auch nassgelegte oder trockengelegte Faserlagen umfassen können, vergleichsweise fest miteinander zu verbinden.

Darüber hinaus umfasst die erfindungsgemäße Anlage eine Übergabeeinrichtung, mittels welcher die Faserlage nach Passieren der ersten Verfestigungseinrichtung vom oberen Trum der zweiten Verfestigungseinrichtung zuführbar ist. Unter "wahlweise zuführbar" ist zu verstehen, dass die erfindungsgemäße Anlage in einem ersten Betriebszustand betreibbar ist, in welchem die Faserlage lediglich die ersten Verfestigungseinrichtungen passiert und nach Verlassen des oberen Trums des Förderers unter Umgehung der zweiten Verfestigungseinrichtung weiteren Produktionsschritten zuführbar ist, und einem zweiten Betriebszustand, in welchem die Faserlage von dem oberen Trum der zweiten Verfestigungseinrichtung zugeführt und von dieser weiteren Produktionsschritten zuleitbar ist, betreibbar ist. Die erfindungsgemäße Anlage ist somit im ersten Betriebszustand zur Herstellung der schwach verfestigten Vliesbahnen und im zweiten Betriebszustand zur Herstellung der starkverfestigten Vliesbahnen geeignet.

Das umlaufende Band des Förderers ist vorzugsweises fluiddurchlässig ausgebildet. Aufgrund dieser Maßnahme kann bspw. die erste Verfestigungseinrichtung als Wasserstrahlverfestigungseinrichtung ausgebildet sein, bei welcher Düsenbalken oberhalb des oberen Trums angeordnet sind, von denen Wasser von oben auf die Faserlage aufsprühbar ist und dieses nach Durchdringen der Faserlage und des Bandes unterhalb des oberen Trums bspw. mithilfe von Saugkästen auffangbar ist. Ferner kann aufgrund dieser Maßnahme die Übergabeeinrichtung eine unterhalb des oberen Trums angeordnetes Fluidabgabeeinrichtung umfassen, mittels welcher Fluid von unten durch das obere Trum gegen die Unterseite der Faserlage leitbar ist, um diese von dem oberen Trum des Förderers abheben und der zweiten Verfestigungseinrichtung zuführen zu können.

Die zweite Verfestigungseinrichtung umfasst vorzugsweise eine oberhalb des oberen Trums angeordnete Verfestigungstrommel mit einem Außenumfang, um welchen die Faserlage teilweise herumführbar ist, derart, dass die Oberseite der Faserlage an der Verfestigungstrommel anliegt. Die Verfestigungseinrichtung kann darüber hinaus einen oder mehrere gegen den von der Faserlage umlaufenden Bereich der Verfestigungstrommel wirkende Düsenbalken umfassen, mittels welchen Fluid gegen die Unterseite der Faserlage gerichtet werden kann. Darüber hinaus kann die zweite Verfestigungseinrichtung eine weitere Verfestigungstrommel mit einem Umfang aufweisen, an welchem die Faserlage mit der anderen Seite anliegt. Wiederum sind einer oder mehrere Düsenbalken vorgesehen, mittels welchen wiederum Fluid gegen die andere Seite der Faserlage, die der Oberseite der Faserlage auf dem oberen Trum entspricht, gerichtet werden. Die Verfestigungstrommeln weisen vorzugsweise fluiddurchlässige Mantelflächen auf, sodass von den Balken abgegebenes Fluid durch diese absaugbar ist.

Da bei der bevorzugten Ausführungsform der erfindungsgemäßen Anlage eine Verfestigungstrommel der zweiten Verfestigungseinrichtung oberhalb des oberen Trums des Förderers angeordnet ist und das umlaufende Band fluiddurchlässig ausgebildet ist, kann die Zuführung der Faserlage zur zweiten Verfestigungseinrichtung bereits dadurch erfolgen, dass Fluid von der unterhalb des oberen Trums angeordneten Fluidabgabeeinrichtung mit einem derartigen Druck und einer derartigen Menge pro Zeiteinheit abgegeben wird, dass die Faserlage vom oberen Trum abgehoben und der Verfestigungstrommel zugeleitet wird. Dieser Effekt und ein Anhaften der Faserlage an der Verfestigungstrommel kann unterstützt werden, indem die Verfestigungstrommel mit einem Unterdruck beaufschlagt ist, der zu einem Ansaugen der zweiten Lage an der Oberfläche der Verfestigungstrommel führt.

Die Fluidabgabeeinrichtung umfasst vorzugsweise einen Düsenbalken mit einer Mehrzahl von Düsen, über die das Fluid unter einem Überdruck abgebbar ist.

Bei einer besonders bevorzugten Ausführungsform der erfindungsgemäßen Anlage umfasst die Übergabeeinrichtung mindestens eine Hubeinrichtung, mittels welcher das obere Trum im Bereich der zweiten Verfestigungseinrichtung anhebbar ist. Aufgrund dieser Maßnahme ist es möglich, den Abstand zwischen der Oberseite des oberen Trums und der oberhalb angeordneten Verfestigungstrommel soweit zu reduzieren, dass die Faserlage mit der Verfestigungstrommel in Lage gelangt. Aufgrund dieser Maßnahme ist es möglich, den Druck, mit welchem das Fluid vom Düsenbalken der Fluidabgabeeinrichtung abgegeben werden muss, zu reduzieren, möglicherweise die Fluidabgabeeinrichtung komplett außer Betrieb zu nehmen, was insbesondere bei Faserlagen mit leichten Fasern von Vorteil sein kann, da diese unter dem Einfluss des Fluids aus der Lage herausgelöst werden können.

Bei einer besonders bevorzugten Ausführungsform umfasst die Hubeinrichtung mindestens eine Hubrolle und/oder einen Hubbalken, wobei der Letztere vorzugsweise reibungsreduzierende Kunststoffkappen oder eine reibungsreduzierende Beschichtung aufweist.

Bei einer des Weiteren bevorzugten Ausführungsform sind mindestens eine Hubrolle und/oder ein Hubbalken in Produktionsrichtung vor der Fluidabgabevorrichtung und mindestens eine Hubrolle und/oder ein Hubbalken hinter der Fluidabgabevorrichtung angeordnet. Das obere Trum des umlaufenden Bandes kann dann über einen in Produktionsrichtung gesehen längeren Bereichs derart angehoben werden, dass die Faserlage im Bereich der Wirkung der Fluidabgabeeinrichtung etwa tangential an der Verfestigungstrommel anliegt.

Besonders bevorzugt ist eine Ausführungsform, bei welcher die Hubeinrichtung derart mit der Fluidabgabeeinrichtung wirkverbunden ist, dass beide Einrichtungen synchron anhebbar und absenkbar sind. Aufgrund dieser Maßnahme führt ein Abheben und Absenken des oberen Trums nicht zu einer Vergrößerung der Abstandes zur Fluidabgabeeinrichtung, wodurch deren Wirkung durch Anhebe- oder Absenkvorgänge nicht beeinflusst wird.

Die Hub- und/oder Fluidabgabeeinrichtungen können, wie bevorzugt, mittels mindestens einem mechanisch, elektrisch, pneumatisch oder hydraulisch betätigbaren Aktuator anhebbar und absenkbar ausgebildet sein.

In der Zeichnung sind - rein schematisch und auszugsweise - Ausführungsbeispiele der erfindungsgemäßen Vorrichtung und zwei verschiedene Betriebszustände der erfindungsgemäßen Vorrichtung dargestellt. Es zeigen:
- Fig. 1: ein erstes Ausführungsbeispiel des erfindungsgemäßen Anlage in einem ersten Betriebszustand;
- Fig. 2: den Ausschnitt II in Fig. 1 in einer vergrößerten Darstellung;
- Fig. 3: einen Fig. 2 entsprechenden Ausschnitt eines weiteren Ausführungsbeispiels einer erfindungsgemäßen Anlage;
- Fig. 4: einen Fig. 2 entsprechenden Ausschnitt eines weiteren Ausführungsbeispiels der erfindungsgemäßen Anlage;
- Fig. 5: einen Fig. 2 entsprechenden Ausschnitt eines weiteren Ausführungsbeispiels einer erfindungsgemäßen Anlage sowie
- Fig. 6: dasselbe Ausführungsbeispiel der erfindungsgemäßen Anlage wie in Fig. 5 jedoch in einem zweiten Betriebszustand.

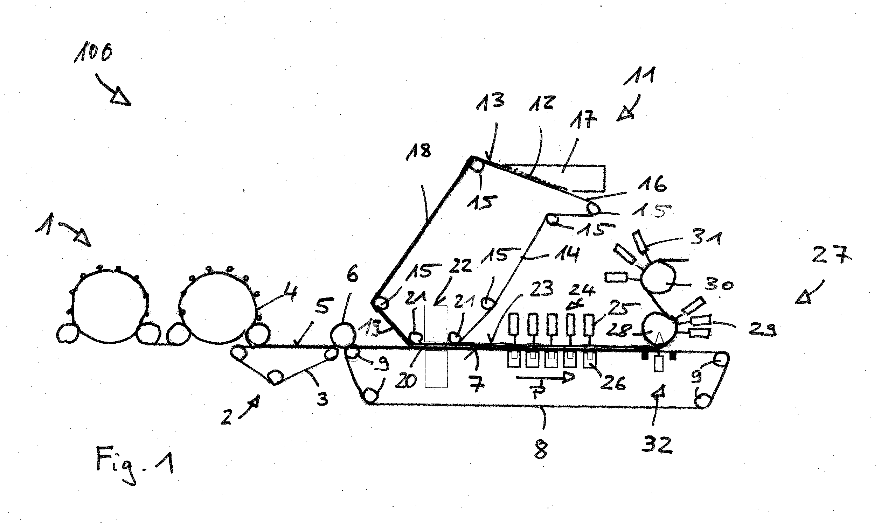

Das in Fig. 1 dargestellte Ausführungsbeispiel einer erfindungsgemäßen Anlage 100 umfasst eine Kardiereinheit 1, mit welcher eine Lage 5 von Langfasern 4, die insbesondere Faserlängen zwischen 10 mm und 150 mm aufweisen können, herstellbar ist. Sie umfasst ein umlaufendes Ablageband 2 mit einem oberen Trum 3, auf welchem die Langfasern in Form einer die Langfasern 4 umfassenden Lage 5 ablegbar sind.

Die Anlage 100 umfasst ferner eine Saugwalze 6, mit welcher die Lage 5 einem oberen Trum 7 eines ersten, um Rollen 9 im Uhrzeigersinn umlaufenden Bandes 8 übergebbar ist. Das obere Trum 7 bewegt sich in Richtung des in den Figuren eingezeichneten Pfeiles, der so mit die Produktionsrichtung P symbolisiert.

Das erste umlaufende Band 8 ist fluiddurchlässig bspw. flüssigkeits- und gasdurchlässig, bspw. als Siebband ausgebildet.

Die Anlage 100 umfasst des Weiteren eine Einrichtung 11 zur Bereitstellung einer Kurzfasern 12 umfassenden Lage 13. Die Einrichtung 11 umfasst hierzu ein zweites umlaufendes Band 14, welches um Rollen 15 entgegen dem Uhrzeigersinn umläuft.

Das zweite umlaufende Band ist wiederum fluiddurchlässig, insbesondere flüssigkeits- und gasdurchlässig, bspw. als Siebband, ausgebildet. Aufgrund der Anordnung der Rollen 15 bildet es einen in Umlaufrichtung gesehen ansteigenden Bereich 16 aus, in welchem ein von einem Stoffauflauf 17 die Kurzfasern 12 - bspw. als wässrige Emulsion - zur Bildung der Lage 13 abgelegt werden. Die Kurzfasern können insbesondere längen von kleiner 1 mm bis 10 mm aufweisen.

Über Bereiche 18, 19, die bezogen auf die Umlaufrichtung schräg abfallen, gelangt die Kurzfasern 12 umfassende Lage 13 zu einem unteren Trum 20 des zweiten umlaufenden Bandes 14. Das untere Trum 20 ist zwischen zwei unteren Rollen 21 gebildet. Im Bereich des unteren Trums 22 kann eine Vorverfestigungseinheit 22 vorgesehen sein, mit welcher die Lagen 5 zu einer Faserlage 23 vorverfestigbar sind. Die Rollen 21 können Teil der Vorverfestigungseinheit 22 sein.

In Produktionsrichtung hinter dem Trum 20 gesehen ist eine erste Verfestigungseinrichtung 24 vorgesehen, mittels welcher die Faserlage 23 verfestigbar ist, während sie sich auf dem oberen Trum 7 des Bandes 8 befindet. Die erste Verfestigungseinrichtung umfasst bei dem dargestellten Ausführungsbeispiel eine Mehrzahl von oberhalb dem Trum 7 angeordneten Düsenbalken 25, mittels welchen Fluid, insbesondere feine Wasserstrahlen derart auf die Faserlage 23 aufgebracht werden kann, dass diese durch Verwirbelung der Fasern verfestigt wird. Unterhalb des Trums 7 sind Absaugkammern 26 angeordnet, mit denen Fluid, insbesondere Wasser, das durch die Faserlage 23 und das obere Trum hindurchgedrungen ist, mit einem Unterdruck abgesaugt werden kann.

In Produktionsrichtung P hinter der ersten Verfestigungseinrichtung ist eine zweite Verfestigungseinrichtung 27 angeordnet. Sie umfasst eine untere Verfestigungstrommel 28, eine Mehrzahl von ersten Düsenbalken 29, mittels welchen Fluid gegen den Außenumfang der Verfestigungstrommel 28 gerichtet werden kann, eine obere Verfestigungstrommel 30 und eine Mehrzahl von zweiten Düsenbalken 31, mittels welchen Fluid gegen den Umfang der oberen Verfestigungstrommel gerichtet werden kann. Mit der zweiten Verfestigungseinrichtung kann die Faserlage 23 zusätzlich verfestigt werden.

Unter dem Trum 7 ist unterhalb der unteren Verfestigungstrommel 28 eine Übergabeeinrichtung 32 vorgesehen, mittels welcher die Faserlage 23 wahlweise der zweiten Verfestigungseinrichtung 27 zugeführt werden kann. Ist dies der Fall, so befindet sich die Anlage 100 in ihrem ersten Betriebszustand.

In diesem ersten Betriebszustand dient die Anlage 100 insbesondere dazu, eine Faserlage, die sowohl die von der Kardiereinheit 1 bereitgestellte Lage 5 und die von dem Stoffauflauf mittels des Bandes 14 bereitgestellte Lage intensiv zu verfestigen, indem die Faserlage beim Umlaufen der unteren und oberen Verfestigungstrommeln 28, 30 Fluid beaufschlagt werden.

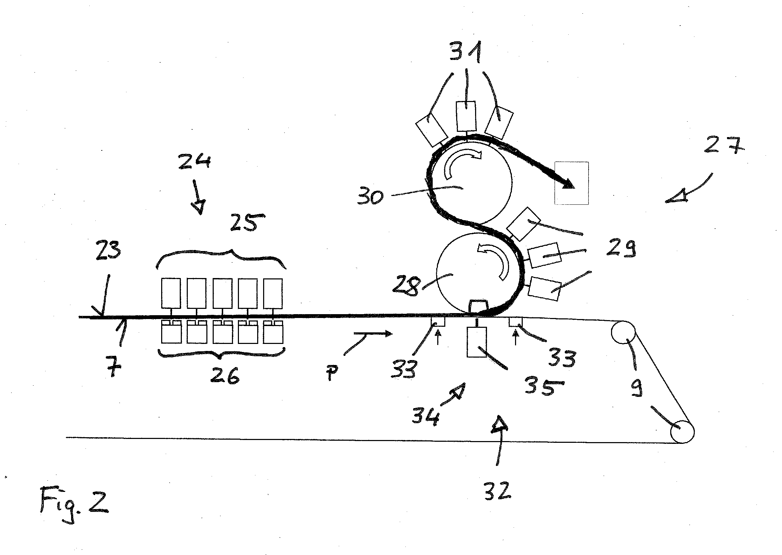

Wie insbesondere in Fig. 2 erkennbar ist, umfasst die Übergabeeinrichtung 32 bei diesem Ausführungsbeispiel zwei in Produktionsrichtung P voneinander beabstandete Hubbalken 33, mittels welchen das obere Trum 7 im Bereich der zweiten Verfestigungseinrichtung 24 anhebbar ist. Die beiden Hubbalken können reibungsreduzierende Kunststoffkappen oder eine reibungsreduzierende Beschichtung aufweisen, um so den durch eine Anlage des umlaufenden Bandes 8 hervorgerufenen Verschleiß zu reduzieren.

In Produktionsrichtung P gesehen zwischen den beiden Hubbalken 33 ist eine Fluidabgabeeinrichtung 34 angeordnet, die einen Düsenbalken 35 umfasst, über die Fluid unter einem Überdruck nach oben abgebbar ist. Bei dem in Fig. 2 dargestellten ersten Betriebszustand befinden sich die beiden Hubbalken in einer angehobenen Position, in welcher der Abstand zwischen dem oberen Trum 7 und der unteren Verfestigungstrommel 28 reduziert ist, sodass die Faserlage 23 unter zusätzlicher Wirkung des vom Düsenbalken 35 abgegebenen Fluids in Anlage mit dem Umfang der unteren Verfestigungstrommel 28 gelangt und diesen über einen Winkel von knapp 180° und hiernach dem Umfang der oberen Verfestigungstrommel über einen Winkel von rund 180° folgt. Die Übergabe der Faserlage 23 von dem oberen Trum 7 auf die untere Verfestigungstrommel 28 wird unterstützt, indem diese mit einem Unterdruck beaufschlagt ist, der nicht nur der Absaugung von Fluid dient, was von den ersten Düsenbalken 29 zur Verfestigung abgegeben wird.

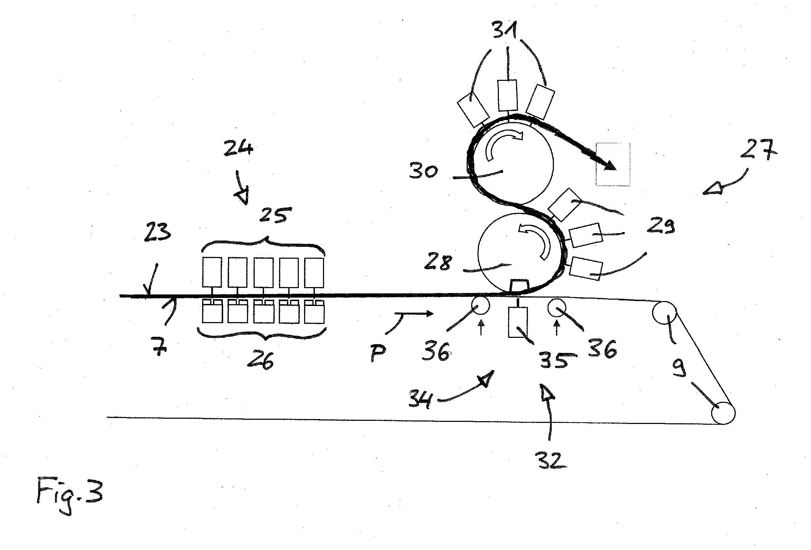

Ein weiteres Ausführungsbeispiel ist in Fig. 3 dargestellt, die die Anlage wiederum im ersten Betriebszustand zeigt. Zwecks Vermeidung von Wiederholungen werden nachfolgend nur die Unterschiede des in Fig. 3 dargestellten Ausführungsbeispiels zum in Fig. 2 dargestellten beschrieben.

Bei dem in Fig .3 dargestellten Ausführungsbeispiel sind die Hubbalken durch Hubrollen 36 ersetzt. Zwar ist die Übergabeeinrichtung 32 somit konstruktiv aufwändiger. Aufgrund der geringeren Reibung zwischen dem Band 8 und Teilen der Übergabeeinrichtung 32 ist jedoch der Verschleiß reduziert.

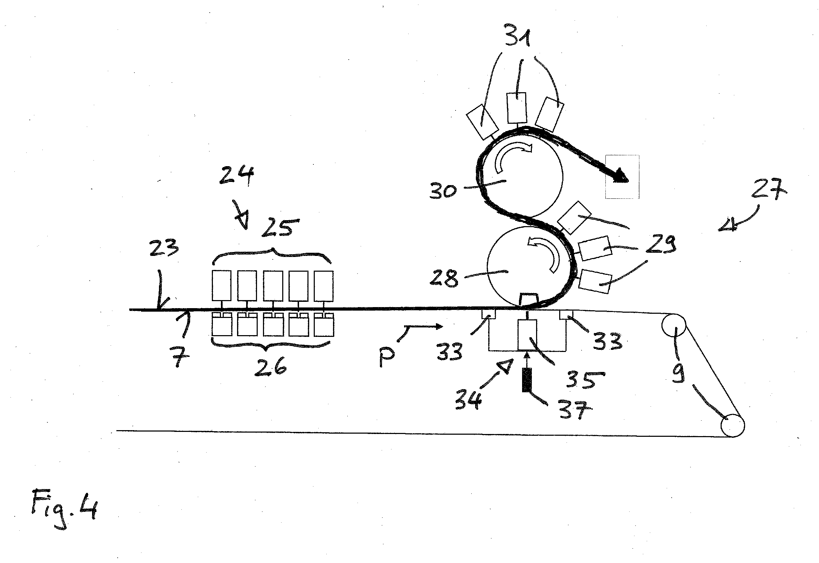

Bei dem weiteren, in Fig. 4 dargestellten Ausführungsbeispiel weist die Übergabeeinrichtung wiederum Hubbalken 33 auf. Im Unterschied zu dem in Fig. 2 dargestellten Ausführungsbeispiel sind jedoch nicht nur diese anhebbar und absenkbar, sondern sind mit der Fluidabgabeeinrichtung 34 derart wirkverbunden, dass Letztere mit den Hubbalken anhebbar und absenkbar ist. Hierbei dient dem Anheben und Absenken ein Aktuator 37, der bspw. mechanisch, elektrisch, hydraulisch oder pneumatisch antreibbar ausgebildet sein kann.

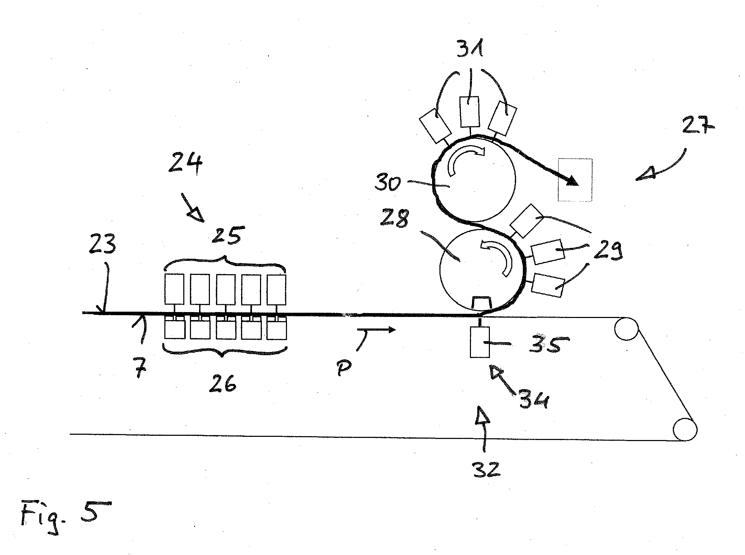

Ein weiteres, konstruktiv einfacheres Ausführungsbeispiel einer erfindungsgemäßen Anlage ist in Fig. 5 in dem ersten Betriebszustand dargestellt. Bei diesem umfasst die Übergabeeinrichtung 32 im Unterschied zu den zuvor beschriebenen Ausführungsbeispielen lediglich eine Fluidabgabeeinrichtung 34 in Form eines Düsenbalkens 35, mittels welchem wahlweise unter einem Überdruck stehendes Fluid nach oben zum Band 8 hin abgebbar ist und somit die Faserlage 23 ausschließlich aufgrund der Wirkung des Fluids an die untere Verfestigungstrommel 28 übergebbar ist.

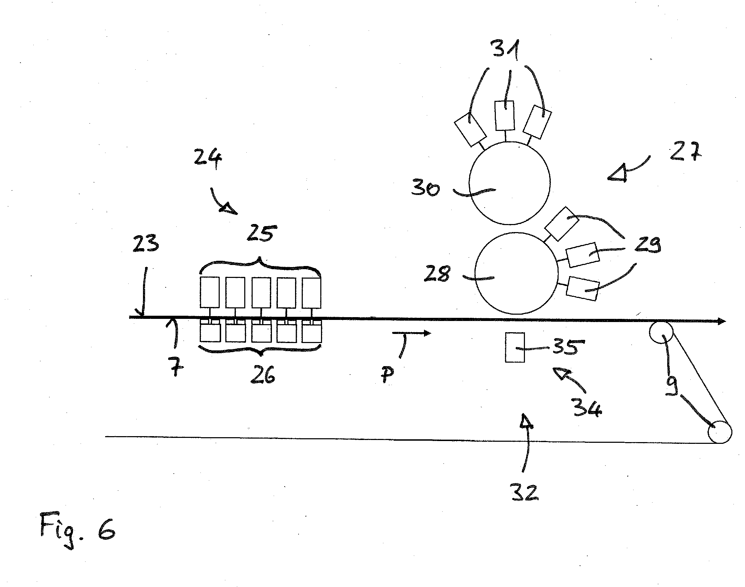

Wird die Übergabeeinrichtung 32 außer Betrieb gesetzt, wie dies in Fig. 6 am Beispiel der in Fig. 5 dargestellten Ausführungsform gezeigt ist, so findet keine Übergabe vom oberen Trum 7 des Bandes 8 an die zweite Verfestigungseinrichtung 27 mehr statt. In diesem zweiten Betriebszustand wird damit die Faserlage 23 nicht mehr dem zweiten Verfestigungsschritt unterzogen, sondern wird auf dem oberen Trum 7 an der zweiten Verfestigungseinrichtung 27 vorbeigeführt. Hieraus resultiert eine deutlich geringer verfestigte Vliesbahn, wie sie insbesondere zur Ausbildung von wegspülbaren Wischtüchern geeignet ist. Derartige Vliesbahnen umfassen regelmäßig nur einen geringeren Anteil oder keine Langfasern, sodass die erfindungsgemäße Anlage in diesem Betriebszustand insbesondere auch zur Herstellung von Fließbahnen geeignet ist, die lediglich eine Kurzfasern umfassende Lage 13 umfassen. Es versteht sich, dass mehrere Stoffaufläufe 17 vorgesehen sein können, über welche dann verschiedene Kurzfasern auf dem Band 14 ablegbar sind und somit die Lage 13 mehrere Kurzfaserschichten oder ein Gemisch aus unterschiedlichen Kurzfasern enthalten kann.

### Bezugszeichenliste:

- 100: Anlage
- 1: Kardiereinheit
- 2: Ablageband
- 3: Trum
- 4: Langfasern
- 5: Lage
- 6: Saugwalze
- 7: Trum
- 8: Band
- 9: Rollen
- 11: Einrichtung
- 12: Kurzfasern
- 13: Lage
- 14: Band
- 15: Rollen
- 16: Bereich
- 17: Stoffauflauf
- 18: Bereich
- 19: Bereich
- 20: Trum
- 21: Rollen
- 22: Vorverfestigungseinheit
- 23: Faserlage
- 24: erste Verfestigungseinrichtung
- 25: Düsenbalken
- 26: Absaugkammern
- 27: zweite Verfestigungseinrichtung
- 28: untere Verfestigungstrommel
- 29: erste Düsenbalken
- 30: obere Verfestigungstrommel
- 31: zweite Düsenbalken
- 32: Übergabeeinrichtung
- 33: Hubbalken
- 34: Fluidabgabeeinrichtung
- 35: Düsenbalken
- 36: Hubbalken
- 37: Aktuator

## Patentansprüche

1. Anlage (100) zur Verfestigung mindestens einer nass- oder trockengelegten Faserlage (23) zu einer Vliesbahn,
mit einem Förderer, der ein umlaufendes Band (8) mit einem oberen Trum (7) umfasst, auf welches die mindestens eine Faserlage (23) ablegbar und in einer Produktionsrichtung (P) verlagerbar ist,
mit einer ersten Verfestigungseinrichtung (24), mittels welcher die Faserlage (23) verfestigbar ist, während sie sich auf den oberen Trum (7) befindet, und mit einer zweiten Verfestigungseinrichtung (27), mittels welcher die Faserlage (23) nach Verlassen des oberen Trums (7) zusätzlich verfestigbar ist,
**dadurch gekennzeichnet, dass** die Anlage eine Übergabeeinrichtung (32) umfasst, mittels welcher die Faserlage (23) wahlweise der zweiten Verfestigungseinrichtung (27) zuführbar ist.

2. Anlage nach Anspruch 1, **dadurch gekennzeichnet, dass** das umlaufende Band (8) fluiddurchlässig ausgebildet ist.

3. Anlage nach Anspruch 1 oder 2, **dadurch gekennzeichnet, dass** die zweite Verfestigungseinrichtung (27) eine oberhalb des oberen Trums (7) angeordnete Verfestigungstrommel (28) umfasst.

4. Anlage nach Anspruch 2 oder 3, **dadurch gekennzeichnet, dass** die Übergabeeinrichtung (32) eine unterhalb des oberen Trums (7) angeordnete Fluidabgabeeinrichtung (34) umfasst, mittels welcher Fluid von unten durch das obere Trum (7) von unten gegen die Faserlage (23) gleitbar ist, derart, dass die Faserlage (23) unter Wirkung des Fluids der Verfestigungstrommel (28) zuleitbar ist.

5. Anlage nach Anspruch 4, **dadurch gekennzeichnet, dass** die Fluidabgabeeinrichtung (34) einen Düsenbalken (35) mit einer Mehrzahl von Düsen umfasst, über die das Fluid unter einem Überdruck abgebbar ist.

6. Anlage nach einem der Ansprüche 1 bis 5, **dadurch gekennzeichnet, dass** die Übergabeeinrichtung (32) mindestens eine Hubeinrichtung umfasst, mittels welcher das obere Trum (7) im Bereich des zweiten Verfestigungseinrichtung (27) anhebbar ist.

7. Anlage nach Anspruch 6, **dadurch gekennzeichnet, dass** die Hubeinrichtung mindestens eine Hubrolle (36) und/oder mindestens einen Hubbalken (33), der vorzugsweise reibungsreduzierende Kunststoffkappen oder eine reibungsreduzierende Beschichtung aufweist, umfasst.

8. Anlage nach Anspruch 7, **dadurch gekennzeichnet, dass** mindestens eine Hubrolle (36) und/oder ein Hubbalken (33) in Produktionsrichtung (P) vor der Fluidabgabeeinrichtung (34) und mindestens eine Hubrolle (36) und/oder einen Hubbalken (33) hinter der Fluidabgabeeinrichtung (34) angeordnet sind.

9. Anlage nach einem der Ansprüche 6 bis 8, **dadurch gekennzeichnet, dass** die Hubeinrichtungen derart mit der Fluidabgabeeinrichtung (34) wirkverbunden ist, dass beide Einrichtungen synchron anhebbar und absenkbar sind.

10. Anlage nach einem der Ansprüche 6 bis 9, **dadurch gekennzeichnet, dass** die Hub- und/oder die Fluidabgabeeinrichtung motorisch mittels mindestens einem mechanisch, elektrisch, pneumatisch oder hydraulisch betätigbaren Aktuator (37) anhebbar und absenkbar ausgebildet sind.

## Claims

1. System (100) for bonding at least one wet-laid or dry-laid fiber layer (23) to form a nonwoven web,
having a conveyor which comprises a circulating belt (8) with an upper strand (7) on which the at least one fiber layer (23) can be deposited and displaced in a production direction (P),
having a first bonding device (24), by means of which the fiber layer (23) can be bonded while it is on the upper strand (7), and having a second bonding device (27), by means of which the fiber layer (23) can additionally be bonded after leaving the upper strand (7),
**characterized in that** the system comprises a transfer device (32) by means of which the fiber layer (23) can optionally be fed to the second bonding device (27).

2. System according to claim 1, **characterized in that** the circulating belt (8) is designed to be fluid-permeable.

3. System according to either claim 1 or claim 2, **characterized in that** the second bonding device (27) comprises a bonding drum (28) arranged above the upper strand (7).

4. System according to either claim 2 or claim 3, **characterized in that** the transfer device (32) comprises a fluid dispensing device (34) arranged below the upper strand (7), by means of which device fluid is slidable from below through the upper strand (7) from below against the fiber layer (23), such that the fiber layer (23) can be conveyed to the bonding drum (28) under the action of the fluid.

5. System according to claim 4, **characterized in that** the fluid dispensing device (34) comprises a nozzle bar (35) having a plurality of nozzles via which the fluid can be dispensed under an overpressure.

6. System according to any of claims 1 to 5, **characterized in that** the transfer device (32) comprises at least one lifting device by means of which the upper strand (7) can be raised in the region of the second bonding device (27).

7. System according to claim 6, **characterized in that** the lifting device comprises at least one lifting roller (36) and/or at least one lifting beam (33), which preferably has friction-reducing plastics caps or a friction-reducing coating.

8. System according to claim 7, **characterized in that** at least one lifting roller (36) and/or one lifting beam (33) is arranged upstream of the fluid dispensing device (34) in the production direction (P) and at least one lifting roller (36) and/or one lifting beam (33) is arranged downstream of the fluid dispensing device (34).

9. System according to any of claims 6 to 8, **characterized in that** the lifting devices are operatively connected to the fluid dispensing device (34) in such a way that both devices can be raised and lowered synchronously.

10. System according to any of claims 6 to 9, **characterized in that** the lifting device and/or the fluid dispensing device can be raised and lowered by motor by means of at least one mechanically, electrically, pneumatically or hydraulically actuated actuator (37).

## Revendications

1. Installation (100) permettant de solidifier au moins une couche fibreuse (23) déposée à l'état humide ou à l'état sec en une bande non tissée,
comportant un transporteur qui comprend une courroie périphérique (8) comportant un brin supérieur (7) sur lequel l'au moins une couche fibreuse (23) peut être déposée et déplacée dans un sens de production (P),
comportant un premier dispositif de solidification (24) au moyen duquel la couche fibreuse (23) peut être solidifiée pendant qu'elle se trouve sur le brin supérieur (7), et comportant un second dispositif de solidification (27) au moyen duquel la couche fibreuse (23) peut être en outre solidifiée lorsqu'elle quitte le brin supérieur (7),
**caractérisée en ce que** l'installation comprend un dispositif de transfert (32) au moyen duquel la couche fibreuse (23) peut être acheminée sélectivement au second dispositif de solidification (27).

2. Installation selon la revendication 1, **caractérisée en ce que** la courroie périphérique (8) est perméable aux fluides.

3. Installation selon la revendication 1 ou 2, **caractérisée en ce que** le second dispositif de solidification (27) comprend un tambour de solidification (28) disposé au-dessus du brin supérieur (7).

4. Installation selon la revendication 2 ou 3, **caractérisée en ce que** le dispositif de transfert (32) comprend un dispositif de distribution de fluide (34) disposé en dessous du brin supérieur (7) et au moyen duquel du fluide peut être glissé par le bas à travers le brin supérieur (7) par le bas contre la couche fibreuse (23), de telle sorte que la couche fibreuse (23) peut être amenée au tambour de solidification (28) sous l'action du fluide.

5. Installation selon la revendication 4, **caractérisée en ce que** le dispositif de distribution de fluide (34) comprend une poutre de buses (35) comportant une pluralité de buses par l'intermédiaire desquelles le fluide peut être distribué sous surpression.

6. Installation selon l'une des revendications 1 à 5, **caractérisée en ce que** le dispositif de transfert (32) comprend au moins un dispositif de levage au moyen duquel le brin supérieur (7) peut être soulevé dans la zone du second dispositif de solidification (27).

7. Installation selon la revendication 6, **caractérisée en ce que** le dispositif de levage comprend au moins un rouleau de levage (36) et/ou au moins une poutre de levage (33) qui présentent de préférence des couvercles en matière plastique réduisant le frottement ou un revêtement réduisant le frottement.

8. Installation selon la revendication 7, **caractérisée en ce qu'**au moins un rouleau de levage (36) et/ou une poutre de levage (33) sont disposés dans le sens de production (P) avant le dispositif de distribution de fluide (34) et au moins un rouleau de levage (36) et/ou une poutre de levage (33) sont disposés après le dispositif de distribution de fluide (34).

9. Installation selon l'une des revendications 6 à 8, **caractérisée en ce que** les dispositifs de levage sont reliés de manière fonctionnelle au dispositif de distribution de fluide (34), de telle sorte que les deux dispositifs peuvent être soulevés et abaissés de manière synchrone.

10. Installation selon l'une des revendications 6 à 9, **caractérisée en ce que** le dispositif de levage et/ou le dispositif de distribution de fluide sont réalisés de manière à pouvoir être soulevés et abaissés de manière motorisée au moyen d'au moins un actionneur (37) pouvant être actionné de manière mécanique, électrique, pneumatique ou hydraulique.
